# EUROPÄISCHE PATENTANMELDUNG

(11) **EP 3 330 033 A1**
(43) Veröffentlichungstag der Anmeldung: **06.06.2018**
(21) Anmeldenummer: 16201597.8
(22) Anmeldetag: 01.12.2016
(51) Int. Cl.: B23K 20/10, H01R 43/02, B23K 101/38

(54) **VORRICHTUNG UND VERFAHREN ZUM VERBINDEN MITTELS ULTRASCHALLS**

(71) Anmelder: Telsonic Holding AG, 9552 Bronschhofen (CH)
(72) Erfinder: Böhm, Markus, 90482 Nürnberg (DE)
(74) Vertreter: Hepp Wenger Ryffel AG

(57) **Zusammenfassung**

Die Erfindung betrifft eine Vorrichtung (1) zum Verbinden mittels Ultraschalls. Die Vorrichtung (1) enthält eine Sonotrode (2), einen Amboss (3) mit einer Haltefläche (4) für ein Terminal (5), und einen Arbeitsraum (6). Der Arbeitsraum (6) befindet sich zwischen Amboss (3) und Sonotrode (2). Im Arbeitsraum (6) sind das Terminal (also ein Kontaktteil) (5) und eine Leitung (13) mit Ultraschall beaufschlagbar, um die Leitung (13) mit dem Terminal (5) zu verbinden. Weiterhin enthält die Vorrichtung (1) eine Fixiervorrichtung (8) mit mindestens einer Kontaktfläche (7, 12) für das Terminal (5). Die Fixiervorrichtung (8) fixiert die Position des Terminals (5) relativ zur Haltefläche (4) des Ambosses. Die Haltefläche (4) und/oder mindestens eine der mindestens einen Kontaktflächen (7, 12) ist so geformt, um das Terminal (5) zumindest teilweise formschlüssig aufzunehmen. Die Sonotrode (2) und/oder der Amboss (3) sind so ausgebildet und angeordnet, dass eine Kraft in das Terminal (5) einbringbar ist mit einer Kraftkomponente, die senkrecht zu einer axialen Richtung des Kabels (13) einwirkt.

## Beschreibung

Die vorliegende Erfindung betrifft eine Vorrichtung und ein Verfahren zum Verbinden mittels Ultraschall gemäss dem Oberbegriff der unabhängigen Ansprüche.

Ultraschall wird unter anderem verwendet, um elektrische Leitungen wie beispielsweise Kabel mit einem Terminal, also einem Kontaktteil, zu verbinden. Ein Terminal ist üblicherweise ein standardisiertes Teil, das oft in hohen Stückzahlen mit Kabeln verbunden wird. Der Ultraschall erzeugt Schwingungen, die dafür sorgen, dass einzelne Litzen der Leitungen aneinander und an dem Terminal reiben. Durch die Reibung werden die Litzen miteinander und mit dem Terminal verschweisst. Je nach eingebrachter Ultraschallenergie schmelzen die Litzen an oder werden kaltverschweisst. Dieses Verfahren bedingt, dass die Ultraschallschwingungen direkt in die Litzen eingebracht und dort absorbiert werden.

Terminals sind oftmals aufgrund ihrer Eigenschwingungen aus schalltechnischer Sicht schwierig zu bearbeiten. Um die Eigenschwingungen zu unterdrücken, ist eine sogenannte Bedämpfung des Terminals notwendig.

Um zu verhindern, dass das Terminal mitschwingt, weist eine Ultraschallschweissanlage einen Amboss und einen Stempel auf. Der Stempel drückt die Litzen auf das Terminal, das durch den Amboss gehalten wird. Dabei weist der Amboss üblicherweise eine Rautierung oder eine Linierung auf. Die Rautierung oder Linierung gräbt sich in das Terminal ein und hält dieses fest. Dadurch schwingt das Terminal nicht mit und die Schwingungen werden von den Litzen und dem Terminal aufgenommen. Allerdings bewirkt die Rautierung oder die Linierung Abdrücke an den verbundenen Teilen, die deren Qualität beeinträchtigen. Derartige Abdrücke treten vor allem bei Terminals aus Kupfer auf sowie bei Terminals, die mit einer Beschichtung versehen sind, wie beispielsweise mit einer Beschichtung aus Nickel. Ausserdem sorgt die Rautierung oder die Linierung für einen Verschleiss des Ambosses. Auch dieses Problem besteht speziell bei vernickelten Terminals, da beim Verbinden Atome vom Amboss in den Nickel übergehen. Insgesamt kann so im Laufe der Lebensdauer einer Ultraschallschweissanlage die Qualität der Verschweissungen abnehmen.

DE 10 2013 101 876 B3 zeigt ein Verfahren zum stoffschlüssigen Fügen eines Kabels an ein Anschlusselement. Bei dem Verfahren wird ein Bündel von Einzelsträngen eines Kabels über eine Eintrittsöffnung in eine Aufnahmehülse eines Anschlusselementes eingefügt. Mit einer Fixiervorrichtung wird die Aufnahmehülse mit dem Bündel verpresst.

US 4,730,764 A offenbart einen Apparat zum Verbinden eines Kabels mit einem Kabelterminal. Das Kabel wird fest gegen ein Terminal gepresst. Ein Sitz umschliesst das Terminal. Der Apparat weist eine Linierung auf, um das Terminal zu fixieren.

EP 2 643 894 B1 zeigt ein Verfahren und eine Vorrichtung für ein koaxiales Ultraschallschweissen. Bei dem Verfahren wird ein koaxialer Verbinder mit einem koaxialen Kabel verbunden. Der Verbinder wird auf das koaxiale Kabel aufgeschoben und in eine Aufspannvorrichtung eingelegt.

Die im Stand der Technik offenbarten Ultraschallvorrichtungen haben den Nachteil, dass eine Fläche des Terminals, an der Ultraschall eingebracht werden kann, klein ist. Weiterhin hat der Stand der Technik den Nachteil, dass der Verschleiss am Amboss hoch ist.

Ausserdem kann die beim Schweissvorgang entstehende Wärme zu einer ungewünschten Materialausdehnung führen.

Es ist daher die Aufgabe der Erfindung, die Nachteile des Standes der Technik zu überwinden. Insbesondere sollen eine Vorrichtung und ein Verfahren zur Verfügung gestellt werden, bei denen Ultraschall auf eine grössere Fläche des Terminals eingebracht werden kann. Weiterhin sollen ein Verschleiss am Amboss und die wärmebedingte Ausdehnung des Terminals reduziert werden.

Ein erster Aspekt der vorliegenden Erfindung betrifft eine Vorrichtung zum Verbinden mittels Ultraschalls. Insbesondere betrifft der erste Aspekt der vorliegenden Erfindung eine Vorrichtung zum Schweissen und/oder Löten. Die Vorrichtung enthält eine Sonotrode, einen Amboss mit einer Haltefläche für ein Terminal und einen Arbeitsraum. Der Arbeitsraum befindet sich zwischen Amboss und Sonotrode. Im Arbeitsraum sind das Terminal und eine elektrische Leitung mit Ultraschall beaufschlagbar, um die Leitung, insbesondere mindestens eine Litze der Leitung, mit dem Terminal zu verbinden. Bevorzugt ist die Leitung ein Kabel mit mindestens einer Litze, und besonders bevorzugt ist die Litze eine Kupfer- oder Aluminiumlitze. Weiterhin enthält die Vorrichtung eine Fixiervorrichtung mit mindestens einer Kontaktfläche für das Terminal. Die Fixiervorrichtung ist ausgebildet und angeordnet, um eine Position des Terminals relativ zur Haltefläche des Ambosses zu fixieren. Die Haltefläche und/oder mindestens eine der Kontaktflächen ist so geformt, um das Terminal zumindest teilweise formschlüssig aufzunehmen. Die Sonotrode und/oder der Amboss sind so ausgebildet und angeordnet, dass eine Kraft in das Terminal einbringbar ist mit einer Kraftkomponente, die senkrecht zu einer axialen Richtung der Leitung einwirkt.

In einer ersten bevorzugten Ausführungsform weist die Kraft eine weitere Kraftkomponente parallel zur axialen Richtung der Leitung auf. In einer zweiten bevorzugten Ausführungsform weist die Kraft ausschliesslich eine Kraftkomponente senkrecht zu einer axialen Richtung der Leitung auf. Dadurch wird das Terminal auf dem Amboss fixiert und kann sich praktisch nicht bewegen. In der Folge werden die Ultraschallschwingungen der Sonotrode mittels der Formschlussklemmung absorbiert. Die Ultraschallenergie geht also nicht durch Schwingungen des Terminals verloren und wird effizienter genutzt.

Ein möglicher Vorteil ist, dass auf Rautierungen oder Linierungen am Amboss und/oder an der Sonotrode verzichtet werden kann, wodurch Abdrücke am Terminal oder Beschädigungen einer Beschichtung des Terminals verhindert werden können. Weiterhin kann ein Verschleiss am Amboss reduziert werden. Die Wärmeableitung kann effizienter erfolgen. Die formschlüssige Klemmung des Terminals kann eine ungewünschte Ausdehnung des Terminals verhindern.

Terminals, die durch die Haltefläche und/oder Fixierflächen gehalten werden, können beispielsweise zylindrische, insbesondere kreiszylindrische oder halbkreiszylindrische, oder plattenförmige Bereiche enthalten oder insgesamt zylindrisch, insbesondere kreiszylindrisch oder halbkreiszylindrisch, oder plattenförmig sein.

Plattenförmige Terminals oder plattenförmige Bereiche eines Terminals können eben oder gebogen sein. Insbesondere kann ein Winkel der Biegung bis zu 90° betragen. Beispiele für Plattenförmige Terminals sind ein Flachstecker, ein Winkelterminal und ein Ringösenterminal.

Das Terminal ist bevorzugt aus Kupfer und weiter bevorzugt versilbert oder vernickelt. In einer bevorzugten Ausführungsform enthält die Fixiervorrichtung mindestens einen relativ zum Amboss beweglichen Schliesser. Der Schliesser weist eine Kontaktfläche auf und kann eine Öffnungs- und eine Schliessposition einnehmen. Die Kontaktfläche des Schliessers ist in der Schliessposition mit dem Terminal in Kontakt, um das Terminal in der Schliessposition zwischen Kontaktfläche und Haltefläche zu fixieren.

Durch den beweglichen Schliesser kann der Arbeitsraum geöffnet und geschlossen werden. Dadurch wird ein Einlegen des Terminals in den Arbeitsraum erleichtert.

In einer bevorzugten Ausführungsform ist der Schliesser durch einen Motor, insbesondere einen elektrischen oder pneumatischen oder hydraulischen Motor antreibbar. Dadurch kann der Prozess des Öffnens und Schliessens automatisiert werden.

In einer bevorzugten Ausführungsform weist die Fixiervorrichtung mindestens zwei relativ zum Amboss bewegliche Schliesser mit je einer Kontaktfläche für das Terminal auf. Die Schliesser können eine Öffnungs- und eine Schliessposition einnehmen. In der Schliessposition sind die Kontaktflächen der Schliesser in Kontakt mit dem Terminal, um das Terminal in der Schliessposition zwischen den Kontaktflächen und der Haltefläche zu fixieren.

Dadurch kann eine Strecke verkürzt werden, die die Schliesser verfahren wird. In der Folge kann der Arbeitsraum schneller geöffnet und/oder geschlossen werden. Ein anderer möglicher Vorteil ist, dass das Terminal zwischen den beiden Kontaktflächen eingeklemmt werden kann.

In einer bevorzugten Ausführungsform ist der mindestens eine bewegliche Schliesser in einer linearen Richtung beweglich.

Dadurch lässt sich der Antrieb des Schliessers kostengünstig realisieren.

Die Vorrichtung enthält zweckmässigerweise mindestens einen, bevorzugt genau zwei Seitenschieber, mit denen die Leitung während des Verbindens gehalten werden kann. Mit besonderem Vorteil ist mindestens einer der Schliesser mit einem Seitenschieber starr verbunden. Dies hat den Vorteil, dass mit nur einem Antrieb sowohl der Seitenschieber an die Leitung herangeführt werden kann als auch der Schliesser an das Terminal. Es ist allerdings auch denkbar und liegt im Rahmen der Erfindung, dass Schliesser nicht starr einem Seitenschieber verbunden sind.

In einer bevorzugten Ausführungsform sind die Kontaktfläche und die Haltefläche dazu ausgebildet, das Terminal in der Schliessposition radial vollständig zu umschliessen.

Dadurch werden eine besonders stabile Fixierung des Terminals und gleichzeitig eine Bedämpfung von Ultraschallschwingungen des Terminals erreicht.

In einer bevorzugten Ausführungsform weisen die Haltefläche und/oder mindestens eine der Kontaktflächen einen Keil oder eine Nut auf. Der Keil oder die Nut erstrecken sich vorzugsweise entlang einer Umfangsrichtung der Kontaktfläche und/oder der Haltefläche.

Durch den Keil und/oder die Nut können Ultraschallschwingungen entlang einer longitudinalen Richtung des Terminals bedämpft werden.

In einer bevorzugten Ausführungsform bilden die Haltefläche und/oder mindestens eine der Kontaktflächen eine symmetrische Aufnahme für das Terminal. Besonders bevorzugt ist die Aufnahme zylindersymmetrisch.

Dadurch werden eine Fixierung und eine Bedämpfung des Terminals weiter verbessert.

In einer bevorzugten Ausführungsform umschliessen die Haltefläche und/oder mindestens eine der Kontaktflächen das Terminal vollständig und formschlüssig in Umfangsrichtung.

Dadurch kann der Ultraschall der Sonotrode im Terminal bedämpft werden.

In einer bevorzugten Ausführungsform ist die Haltefläche C-förmig.

Dadurch lässt sich der Amboss einfach und kosteneffizient herstellen.

In einer bevorzugten Ausführungsform weist der mindestens eine bewegliche Schliesser eine Seitenfläche zum Ausrichten einer Leitung auf. Besonders bevorzugt ist die Seitenfläche an einem Seitenschieber angeordnet.

Dadurch kann eine Leitung vor einer Ultraschallschweissung ausgerichtet werden. In der Folge kann die Leitung und/oder das Terminal vor dem Schliessen der Fixiervorrichtung nicht verrutschen.

In einer bevorzugten Ausführungsform ist die Haltefläche und/oder mindestens eine der Kontaktflächen glatt. Besonders bevorzugt weisen die Haltefläche und/oder mindestens eine der Kontaktflächen keine Linierung oder Rautierung auf.

Dadurch kann der Amboss und/oder die Fixiervorrichtung einfacher hergestellt werden. Weiterhin wird ein Verschleiss am Amboss und/oder an der Fixiervorrichtung reduziert.

Glatt bedeutet, dass die Oberfläche abgesehen von der Rauigkeit der Oberfläche des Materials und ihrer gegebenenfalls formschlüssigen Krümmung keine weiteren Vertiefungen oder Erhöhungen aufweist. Insbesondere weist die Oberfläche keine Erhöhungen, z.B. Rautierungen oder Linierungen, oder Vertiefungen, z.B. Rillen, zum Fixieren eines Terminals während eines Ultraschallvorgangs auf.

Die Sonotrode und/oder der Amboss können beispielsweise Stahl, Titan oder Aluminium enthalten oder daraus bestehen. In einigen Ausführungsbeispielen können sie zumindest an der Haltefläche bzw. der Kontaktfläche eine Beschichtung aus polykristallinem Diamant aufweisen.

Mit weiterem Vorteil sind die Haltefläche und/oder die Kontaktfläche als polierte Oberflächen ausgeführt und weisen bevorzugt eine Rauigkeit im Bereich von 0,25 µm bis 9 µm auf. Auf diese Weise können Abdrücke besonders gut verhindert werden. Die genannten Rauigkeiten können beispielsweise durch Fräsen, Schleifen und Polieren erreicht werden.

Die Sonotrode kann beispielsweise als an sich bekannte torsional oder linear schwingende Sonotrode ausgebildet sein.

Die Vorrichtung kann eine Temperiereinrichtung zur Temperierung, insbesondere zum Kühlen oder zum Heizen, der Sonotrode und/oder des Ambosses und/der der Fixiervorrichtung enthalten. Die Temperiereinrichtung kann mindestens eine Temperierzuführung für ein Temperiermedium und mindestens ein mit der Temperierzuführung wirkverbundenes Temperierelement enthalten, welches bevorzugt im Bereich einer zu kühlenden Fläche angeordnet ist, beispielsweise im Bereich einer Schweissfläche der Sonotrode. Wie weiter unten erläutert wird, kann die Wirkverbindung beispielsweise in einer Fluidverbindung oder einer elektrischen Verbindung bestehen. Wenn die Temperierzuführung vorteilhafterweise in einem Schwingungsknoten der Sonotrode angeordnet ist, wird die Temperierzuführung praktisch nicht von den Ultraschallschwingungen beeinträchtigt. Auch ein Heizen der Sonotrode im Bereich einer Schweissfläche hat sich in einigen Ausführungen als vorteilhaft erwiesen. Weiterhin hat das Temperieren der Sonotrode den Vorteil, dass die Temperatur und damit auch die Resonanzfrequenz vergleichsweise konstant gehalten werden kann.

In einigen Ausführungsbeispielen enthält die Temperierzuführung mindestens einen Zuführkanal, durch den ein Temperierfluid in das zu temperierende Bauteil einführbar oder daraus ausführbar ist. In diesen Ausführungsbeispielen bildet das Temperierfluid das Temperiermedium. Das Temperierfluid, insbesondere ein Kühlfluid oder ein Heizfluid, kann beispielsweise ein Gas oder eine Flüssigkeit sein, wie etwa Wasser. Durch eine erste Öffnung kann das Temperierfluid eingeführt werden, und aus einer zweiten Öffnung kann es wieder ausgeführt werden. Das Temperierelement kann mindestens einen Temperierkanal für das Temperierfluid enthalten, welcher mit dem Zuführkanal fluidverbunden ist.

Alternativ kann das Temperiermedium ein elektrischer Strom sein. Dieser kann durch eine elektrische Leitung in das zu temperierende Bauteil eingeführt wird, wobei die elektrische Leitung die Temperierzuführung bildet. Das Temperierelement kann ein mit der elektrischen Leitung elektrisch verbundenes elektrisches Temperierelement sein. Das elektrische Temperierelement kann beispielsweise als Peltier-Element ausgebildet sein, um ein Bauteil zu kühlen oder zu heizen, und/oder als Heizdraht, um ein Bauteil zu heizen.

Ein weiterer Aspekt der vorliegenden Erfindung betrifft ein Verfahren zum Verbinden, insbesondere zum Schweissen und/oder Löten, mittels Ultraschalls. Das Verfahren kann beispielsweise mit einer wie oben beschriebenen Vorrichtung durchgeführt werden. Das Verfahren enthält die folgenden Schritte:
- Einlegen eines Terminals auf eine Haltefläche eines Ambosses einer Vorrichtung zum Verbinden, insbesondere zum Schweissen und/oder Löten, mittels Ultraschalls,
- Fixieren des Terminals relativ zum Amboss mittels einer Fixiervorrichtung. Die Fixiervorrichtung enthält mindestens eine Kontaktfläche, die mit dem Terminal in Kontakt bringbar ist, wobei die Haltefläche und/oder mindestens eine der Kontaktflächen so geformt sind, um das Terminal zumindest teilweise formschlüssig aufzunehmen,
- Einbringen von Ultraschall durch eine Sonotrode in das Terminal, wobei durch den Ultraschall das Terminal und eine elektrische Leitung, bevorzugt mindestens eine Litze eines Kabels, insbesondere eine Kupfer- oder Aluminiumlitze, miteinander verbunden werden. Beim Einbringen von Ultraschall wird eine Kraft in das Terminal eingebracht mit einer Kraftkomponente, die in einer Richtung senkrecht zu einer axialen Richtung der Leitung wirkt, sodass das Terminal gegen den Amboss gedrückt wird.

Dadurch wird das Terminal auf dem Amboss fixiert und kann sich praktisch nicht bewegen. In der Folge werden die Ultraschallschwingungen der Sonotrode von der Leitung absorbiert. Die Ultraschallenergie geht also nicht durch Schwingungen des Terminals verloren und wird effizienter genutzt.

In einer bevorzugten Ausführungsform bewegt sich beim Fixieren mindestens ein, bevorzugt zwei, Schliesser von einer Öffnungsposition in eine Schliessposition. Der Schliesser enthält die Kontaktfläche und fixiert in der Schliessposition das Terminal.

Durch den beweglichen Schliesser kann der Arbeitsraum geöffnet und geschlossen werden. Dadurch wird ein Einlegen des Terminals in den Arbeitsraum erleichtert.

In einer bevorzugten Ausführungsform führt der mindestens eine bewegliche Schliesser eine lineare Bewegung durch.

Dadurch lässt sich der Antrieb des Schliessers kostengünstig realisieren.

In einer bevorzugten Ausführungsform weist der mindestens eine bewegliche Schliesser eine Seitenfläche auf. Die Seitenfläche richtet bei der Bewegung des Schliessers die Leitung aus.

Dadurch kann eine Leitung vor einer Ultraschallschweissung ausgerichtet werden. In der Folge kann die Leitung und/oder der Terminal vor dem Schliessen der Fixiervorrichtung nicht verrutschen.

Anhand von Figuren, welche lediglich Ausführungsbeispiele darstellen, wird die Erfindung im Folgenden näher erläutert. Es zeigen schematisch:
- Figur 1A:: eine schematische Darstellung einer ersten erfindungsgemässen Vorrichtung in einer Draufsicht,
- Figur 1B:: ein Terminal, das in einer erfindungsgemässen Vorrichtung mit einem Kabel verschweisst wird,
- Figur 2:: eine schematische Darstellung einer Schnittansicht der ersten erfindungsgemässen Vorrichtung in einer Öffnungsposition,
- Figur 3:: eine schematische Darstellung einer Schnittansicht der ersten erfindungsgemässen Vorrichtung in einer Schliessposition,
- Figur 4:: eine schematische Darstellung einer zweiten erfindungsgemässen Vorrichtung in einer Schnittansicht,
- Figuren 5A - 5D:: schematische Darstellungen weiterer Terminals.

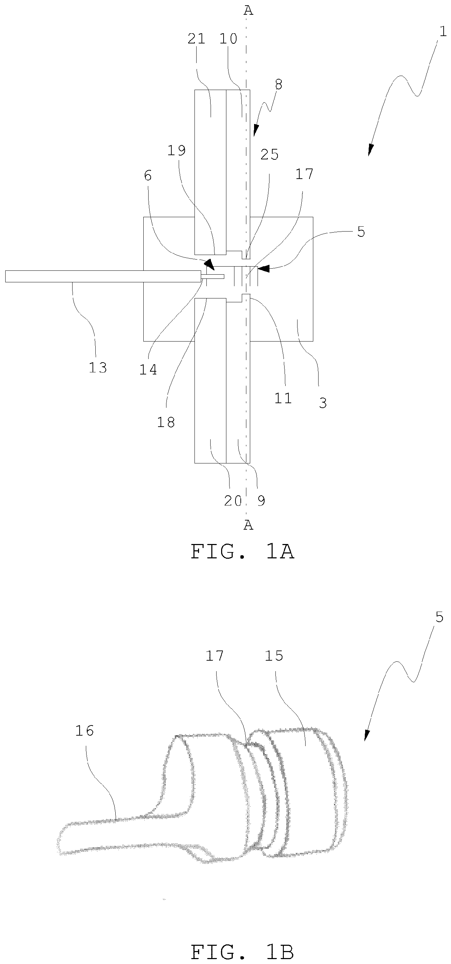

Figur 1A zeigt eine Vorrichtung 1 zum Verbinden einer elektrischen Leitung, die als Kabel 13 mit einer Litze 14 ausgestaltet ist, mit einem Terminal (also einem Kontaktteil) 5. Dabei wird die Litze 14 des Kabels 13 mit dem Terminal 5 verschweisst. Eine Detailansicht des Terminals 5 ist in Figur 1B gezeigt. Das Terminal 5 weist einen Kopf 15 und eine an den Kopf 15 angeschlossene Platte 24 auf. Die Platte 24 enthält eine Schweissfläche 16, an die die Litze 14 des Kabels 13 angeschweisst wird. Der Kopf 15 ist im Wesentlichen kreiszylindrisch und enthält eine Rille 17 in Umfangsrichtung.

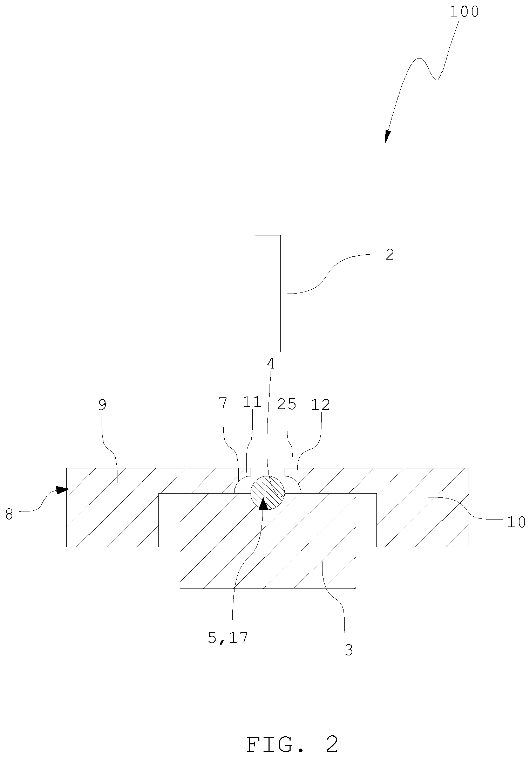

Das Terminal 5 wird zunächst in einen Arbeitsraum 6 eingebracht, indem das Terminal 5 auf einen Amboss 3 platziert wird. Der Amboss 3 befindet sich dann unterhalb des Terminals 5. Über dem Terminal 5 ist eine Sonotrode 2 (siehe Figur 2) angeordnet. Seitlich zur Achse der Litze 14 des Kabels 13 ist eine Fixiervorrichtung 8 mit zwei Schliessern 9, 10 angeordnet. Die Schliesser 9, 10 weisen jeweils einen Keil 11, 25 auf. Weiterhin sind die Schliesser 9, 10 starr mit Seitenschiebern 20, 21 verbunden. Die Seitenschieber 20, 21 weisen jeweils eine Seitenfläche 18, 19 auf. Die Seitenflächen 18, 19 begrenzen den Arbeitsraum 6. Während und vor dem Schweissvorgang richten die Seitenflächen das Kabel 13 aus.

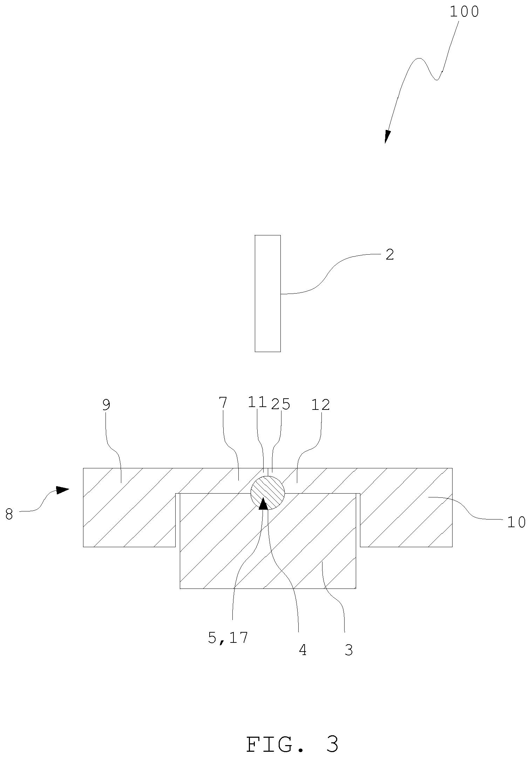

Figur 2 zeigt einen Schnitt entlang der Achse A-A aus Figur 1A. Das Terminal 5 wird entlang einer Schnittfläche im Querschnitt der Rille 17 gezeigt. Dieser Querschnitt wird formschlüssig durch den Amboss 3 aufgenommen. Der Amboss 3 weist dazu eine C-förmige Ausnehmung mit einer Haltefläche 4 auf. Die Haltefläche 4 weist dabei dieselbe Form wie das Terminal 5 an der Rille auf und ist glatt. Ebenso weisen der erste Schliesser 9 und der zweite Schliesser 10 formschlüssige Kontaktflächen 7, 12 auf. Figur 2 zeigt die Fixiervorrichtung 8 in einer Öffnungsposition. In der Öffnungsposition wird das Terminal 5 eingelegt. Anschliessend werden der erste Schliesser 9 und der zweite Schliesser 10 in Richtung des Terminals 5 verfahren, bis das Terminal 5 in seiner Rille 17 vollständig formflüssig aufgenommen worden ist. Auf diese Weise wird die in Figur 3 dargestellte Schliessposition erreicht.

In der in Figur 3 dargestellten Schliessposition umschliessen die Kontaktflächen 7, 12 und die Haltefläche 4 das Terminal vollständig. In der Schliessposition bilden die Haltefläche 4 und die Kontaktflächen 7, 12 eine zylindersymmetrische Aufnahme für das Terminal 5 und umschliessen das Terminal formschlüssig.

Anschliessend wird die Sonotrode 2 in Kontakt mit der Litze 14 gebracht und eine Kraft in Richtung des Ambosses 3 eingetragen. Dadurch wird die Litze 14 gegen die Platte 24 gedrückt. Dabei werden Ultraschallschwingungen auf die Litzen 14 des Kabels 13 eingebracht. Die Ultraschallschwingungen werden von den Litzen 14 auch auf das Terminal 5 übertragen; allerdings werden die Ultraschallschwingungen des Terminals 5 durch die formflüssige Aufnahme in dem Amboss 3 und den Schliessern 9, 10 bedämpft.

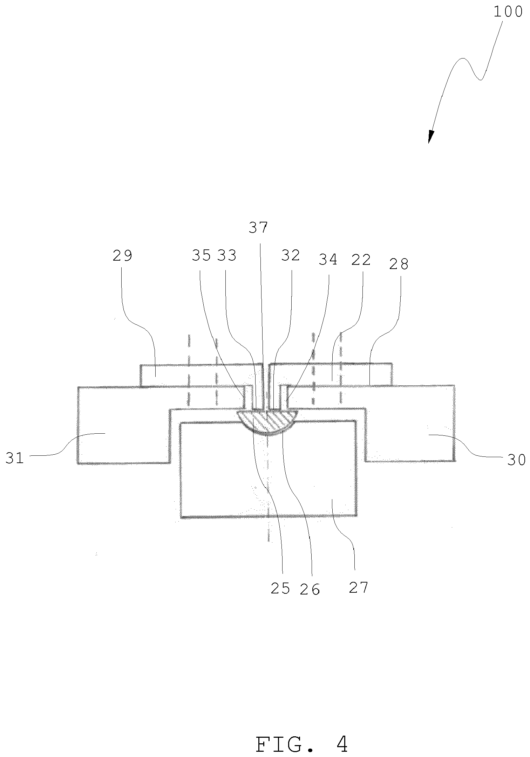

Eine zweite Ausführungsform der Vorrichtung zum Verbinden ist in Figur 4 gezeigt. Die Vorrichtung 100 weist einen Amboss 27 auf. Der Amboss 27 hält in einer Haltefläche 26 formschlüssig das Terminal 25 in einem Arbeitsraum 37. Das Terminal 25 ist plattenförmig ausgebildet mit einem halbzylindrischen Querschnitt. Die Haltefläche 26 ist formschlüssig zum halbkreisförmigen Querschnitt des Terminals 25.

Figur 4 zeigt die Vorrichtung 100 in einer Schliessposition. In der Schliessposition sind Schliesser 28 und 29 über ihre Kontaktflächen 32 und 33 in Kontakt mit einer Oberfläche des Terminals 25. Bei diesem Kontakt drücken die Schliesser 28, 29 das Terminal 25 gegen die Haltefläche 26 des Ambosses 27. Dadurch werden Schwingungen des Terminals 25 bedämpft.

Weiterhin enthält die Vorrichtung 100 Seitenschieber 30, 31. Die Seitenschieber weisen eine erste und eine zweite Seitenfläche 34, 35 auf. Die Seitenflächen richten ein Kabel (siehe Figur 1) entlang seiner Achse aus. Die Seitenschieber 30, 31 sind jeweils mit einem Schliesser 28, 29 verbunden. Die Verbindung zwischen Schliessern 28, 29 und Seitenschiebern 30, 31 wird über eine Bohrung mit einer Schraube 22 realisiert.

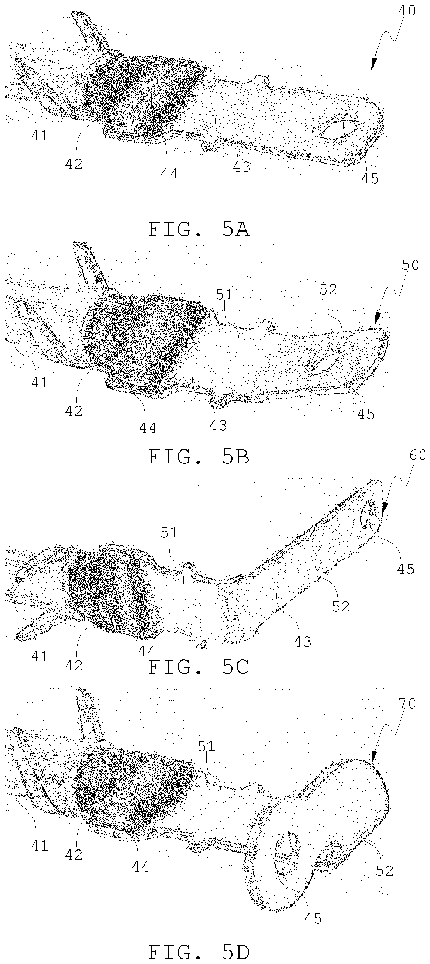

Figuren 5A bis 5D zeigen schematische Darstellungen von weiteren Terminals, die mithilfe der Vorrichtung 1 zum Verbinden einer Leitung mit einem Kabel verbunden werden können. Figur 5A zeigt ein plattenförmiges Terminal 40. Das Terminal 40 ist mit einem Kabel 41 verbunden. Eine Litze 42 des Kabels 41 wurde mit einer Oberseite 43 des Terminals 40 an einer Schweissung 44 ultraschallverschweisst. Weiterhin hat das Terminal 40 eine Öse 45, an der das Terminal 40 angeschlossen werden kann. Figur 5B zeigt eine Schweissung an ein ähnliches plattenförmiges Terminal 50 mit einem ersten und einem zweiten plattenförmigen Bereich 51, 52. Zwischen den Bereichen 51, 52 ist ein stumpfer Winkel gebildet. Figur 5C zeigt ein plattenförmiges Terminal 60, das ähnlich zu dem Terminal 50 in Figur 5B ist, wobei der Winkel zwischen den Bereichen hier jedoch rechtwinklig ist. Ein weiteres Terminal 70 mit einem rechten Winkel zwischen den zwei Bereichen 51, 52 ist in Figur 5D gezeigt.

## Patentansprüche

1. Vorrichtung zum Verbinden (1), insbesondere zum Schweissen und/oder Löten, mittels Ultraschalls, enthaltend
- eine Sonotrode (2),
- einen Amboss (3) mit einer Haltefläche (4) für ein Terminal (5),
- einen Arbeitsraum (6) zwischen Amboss (3) und Sonotrode (2), in dem das Terminal (5) und eine elektrische Leitung (13), insbesondere mindestens eine Litze (14) eines Kabels (13), bevorzugt mindestens eine Kupfer- oder Aluminiumlitze (14), mit Ultraschall beaufschlagbar sind, um die Leitung (13), insbesondere die mindestens eine Litze (14), mit dem Terminal (5) zu verbinden,
- eine Fixiervorrichtung (8) mit mindestens einer Kontaktfläche (7, 12) für das Terminal (5), wobei die Fixiervorrichtung (8) ausgebildet und angeordnet ist, um eine Position des Terminals (5) relativ zur Haltefläche (4) des Ambosses zu fixieren,
**dadurch gekennzeichnet, dass**
die Haltefläche (4) und/oder mindestens eine der Kontaktflächen (7, 12) so geformt sind, um das Terminal (5) zumindest teilweise formschlüssig aufzunehmen, und dass die Sonotrode (2) und/oder der Amboss (3) so ausgebildet und angeordnet sind, dass eine Kraft in das Terminal (5) einbringbar ist mit einer Kraftkomponente, die senkrecht zu einer axialen Richtung der Leitung (13) einwirkt.

2. Vorrichtung (1) nach Anspruch 1, **dadurch gekennzeichnet, dass** die Fixiervorrichtung (8) mindestens einen relativ zum Amboss (3) beweglichen Schliesser (9, 10) enthält, der die Kontaktfläche (7, 12) aufweist und eine Öffnungs- und eine Schliessposition einnehmen kann, wobei die Kontaktfläche (7, 12) des Schliessers (9, 10) in der Schliessposition mit dem Terminal (5) in Kontakt ist, um das Terminal (5) in der Schliessposition zwischen Kontaktfläche (7, 12) und Haltefläche (4) zu fixieren.

3. Vorrichtung (1) nach Anspruch 1 oder 2, **dadurch gekennzeichnet, dass** die Fixiervorrichtung (8) mindestens zwei relativ zum Amboss (3) bewegliche Schliesser (9, 10) mit je einer Kontaktfläche (7, 12) für das Terminal (5) enthält, wobei die Schliesser eine Öffnungs- und eine Schliessposition einnehmen können und die Kontaktflächen (7, 12) der Schliesser (9, 10) in der Schliessposition mit dem Terminal (5) in Kontakt sind, um das Terminal (5) in der Schliessposition zwischen Kontaktflächen (7, 12) und Haltefläche (4) zu fixieren.

4. Vorrichtung (1) nach einem der Ansprüche 2 und 3, **dadurch gekennzeichnet, dass** der mindestens eine bewegliche Schliesser (9, 10) in einer linearen Richtung beweglich ist.

5. Vorrichtung (1) nach einem der Ansprüche 2 bis 4, **dadurch gekennzeichnet, dass** die Kontaktfläche (7, 12) und die Haltefläche (4) dazu ausgebildet sind, das Terminal (5) in der Schliessposition radial vollständig zu umschliessen.

6. Vorrichtung (1) nach einem der vorhergehenden Ansprüche, **dadurch gekennzeichnet, dass** die Haltefläche (4) und/oder mindestens eine der Kontaktflächen (7, 12) einen Keil (11, 25) oder eine Nut aufweisen, wobei sich der Keil (11, 25) oder die Nut vorzugsweise entlang einer Umfangsrichtung des Terminals (5) erstreckt.

7. Vorrichtung (1) nach einem der vorhergehenden Ansprüche, **dadurch gekennzeichnet, dass** die Haltefläche (4) und/oder mindestens eine der Kontaktflächen (7, 12) eine symmetrische, bevorzugt zylindersymmetrische, Aufnahme für das Terminal (5) bilden.

8. Vorrichtung (1) nach einem der vorhergehenden Ansprüche, **dadurch gekennzeichnet, dass** die Haltefläche (4) und/oder mindestens eine der Kontaktflächen (7, 12) das Terminal (5) vollständig und formschlüssig in Umfangsrichtung umschliessen.

9. Vorrichtung (1) nach einem der vorherigen Ansprüche, **dadurch gekennzeichnet, dass** die Haltefläche (4) C-förmig ist.

10. Vorrichtung (1) nach einem der Ansprüche 2 bis 9, **dadurch gekennzeichnet, dass** der mindestens eine bewegliche Schliesser (9, 10) eine Seitenfläche (18, 19) zum Ausrichten einer Leitung (13) aufweist.

11. Vorrichtung (1) nach einem der vorangehenden Ansprüche, **dadurch gekennzeichnet, dass** die Haltefläche (4) und/oder mindestens eine der Kontaktflächen (7, 12) glatt sind.

12. Verfahren zum Verbinden, insbesondere zum Schweissen und/oder Löten, mittels Ultraschalls, insbesondere mit einer Vorrichtung (1) gemäss einem der vorangehenden Ansprüche, enthaltend die folgenden Schritte:
- Einlegen eines Terminals (5) auf eine Haltefläche (4) eines Ambosses (3) einer Vorrichtung (1) zum Verbinden, insbesondere zum Schweissen und/oder Löten, mittels Ultraschalls,
- Fixieren des Terminals (5) relativ zum Amboss (3) mittels einer Fixiervorrichtung (8), wobei die Fixiervorrichtung (8) mindestens eine Kontaktfläche (7, 12) enthält, die mit dem Terminal (5) in Kontakt bringbar ist, wobei die Haltefläche (4) und/oder mindestens eine der Kontaktflächen (7, 12) so geformt sind, um das Terminal (5) zumindest teilweise formschlüssig aufzunehmen,
- Einbringen von Ultraschall durch eine Sonotrode (2) in das Terminal (5), wobei durch den Ultraschall das Terminal (5) und eine elektrische Leitung (13), bevorzugt mindestens eine Litze (14) eines Kabels (13), insbesondere mindestens eine Kupfer- oder Aluminiumlitze (14), miteinander verbunden werden und wobei beim Einbringen von Ultraschall eine Kraft in das Terminal (5) eingebracht wird mit einer Kraftkomponente, die in einer Richtung senkrecht zu einer axialen Richtung der Leitung (13) wirkt, sodass das Terminal (5) gegen den Amboss (3) gedrückt wird.

13. Verfahren nach Anspruch 12, **dadurch gekennzeichnet, dass** beim Fixieren mindestens ein, bevorzugt zwei, Schliesser (9, 10) sich von einer Öffnungsposition in eine Schliessposition bewegt, wobei der Schliesser die Kontaktfläche (7, 12) enthält und in der Schliessposition das Terminal (5) fixiert.

14. Verfahren nach Anspruch 13, **dadurch gekennzeichnet, dass** der mindestens eine bewegliche Schliesser (9, 10) eine lineare Bewegung durchführt.

15. Verfahren nach einem der Ansprüche 13 und 14, **dadurch gekennzeichnet, dass** der mindestens eine bewegliche Schliesser (9, 10) eine Seitenfläche (18, 19) aufweist und die Seitenfläche (18, 19) bei der Bewegung des Schliessers die Leitung (13) ausrichtet.
